# EUROPÄISCHE PATENTSCHRIFT

(11) **EP 1 901 953 B1**
(45) Veröffentlichungstag und Bekanntmachung des Hinweises auf die Patenterteilung: **07.01.2009**
(21) Anmeldenummer: 06743152.8
(22) Anmeldetag: 14.06.2006
(51) Int. Cl.: B62D 1/184

(54) **KLEMMVORRICHTUNG FÜR EINE LENKSÄULE**
CLAMPING DEVICE FOR A STEERING COLUMN
DISPOSITIF DE SERRAGE POUR COLONNE DE DIRECTION

(30) Priorität: 06.07.2005 DE 102005031594
(43) Veröffentlichungstag der Anmeldung: 26.03.2008
(73) Patentinhaber: Schaeffler KG, 91074 Herzogenaurach (DE)
(72) Erfinder: WILHELM, Sigurd, Herzogenaurach 91074 (DE)
(86) Internationale Anmeldenummer: PCT/EP2006/005689
(87) Internationale Veröffentlichungsnummer: WO 2007/003258

(56) Entgegenhaltungen:
- DE-A1- 10 304 640

## Beschreibung

### Gebiet der Erfindung

Die Erfindung betrifft eine Klemmvorrichtung zur Lagefixierung einer in ihrer Länge und/oder Neigung verstellbaren Lenksäule eines Fahrzeugs.

### Hintergrund der Erfindung

Eine Klemmvorrichtung nach dem Oberbegriff des Anspruchs 1 ist beispielsweise aus der DE 103 04 640 A1 bekannt. Diese Klemmvorrichtung umfasst zwei scheibenförmige Klemmplattenelemente, zwischen denen Wälzkörper geführt sind, wobei die Oberfläche eines der Klemmplattenelemente Klemmrampen für die Wälzkörper aufweist. Durch diese Ausbildung der Klemmplattenelemente wird bei einer Verschwenkung eines der Elemente relativ zum anderen Element der axiale Abstand zwischen den Klemmplattenelementen verändert. Die Wälzkörper sind in einem Führungselement, welches zwischen den Klemmplattenelementen angeordnet ist, geführt. Die gesamte Klemmvorrichtung kann als vormontierte Einheit in ein Kraftfahrzeug eingebaut werden.

### Aufgabe der Erfindung

Der Erfindung liegt die Aufgabe zugrunde, eine für eine verstellbare Lenksäule eines Fahrzeugs geeignete Klemmvorrichtung anzugeben, welche sich durch einen besonders kompakten und einfachen Aufbau bei hoher Funktionalität auszeichnet.

### Zusammenfassung der Erfindung

Diese Aufgabe wird erfindungsgemäß gelöst durch eine Klemmvorrichtung mit den Merkmalen des Anspruchs 1. Diese für eine Lenksäule eines Fahrzeugs, insbesondere Kraftfahrzeugs, vorgesehene Klemmvorrichtung umfasst in an sich bekannter Weise eine Klemmscheibe sowie mehrere auf dieser abrollende Wälzkörper. Im Unterschied zu bekannten Klemmvorrichtungen für Lenksäulen ist jedoch keine zweite Klemmscheibe vorgesehen. Stattdessen kontaktieren die Wälzkörper auf der der einzigen Klemmscheibe abgewandten Seite einzelne in einer gemeinsamen Ebene angeordnete Kontaktelemente. Die eine Klemmscheibe ersetzenden Kontaktelemente, deren Anzahl der Anzahl der Wälzkörper entspricht, haben den Vorteil, dass sie wesentlich weniger Raum als eine komplette Klemmscheibe einnehmen. Auf diese Weise wird sowohl Bauraum gespart bzw. für andere Funktionalitäten zur Verfügung gestellt als auch eine Gewichtseinsparung erzielt.

Nach einer bevorzugten Ausgestaltung sind die Kontaktelemente in einem gemeinsamen Führungselement geführt, welches zugleich der Führung der Wälzkörper dient und bevorzugt aus Kunststoff gefertigt ist. Während bei Klemmvorrichtungen nach dem Stand der Technik, beispielsweise nach der DE 103 04 640 A1, Führungselement und Klemmscheiben ausschließlich axial hintereinander angeordnet sein können, nehmen in der erfindungsgemäßen Klemmvorrichtung das Führungselement und die eine der Klemmscheiben ersetzenden Kontaktelemente zumindest teilweise den selben axialen Bauraum ein.

Zusätzlich zu Aufnahmen für die Kontaktelemente sowie für die Wälzkörper kann das Führungselement in vorteilhafter Ausgestaltung auch eine Verstellkontur aufweisen, die eine Linearverstellung, insbesondere Höhenverstellung, der Lenksäule ermöglicht. Diese Verstellkontur ist ohne zusätzlichen axialen oder radialen Platzbedarf in das Führungselement integrierbar. Mit dem Bereitstellen der Höhenverstellfunktion durch das Führungselement entfällt die Notwendigkeit, die entsprechende Funktion mittels der Klemmscheibe zu realisieren. Die Klemmscheibe ist damit ohne Einschränkungen der Funktionalität besonders einfach gestaltbar.

Als weitere Funktion des Führungselementes kann in dieses in vorteilhafter Weise auch eine Rastfunktion integriert werden. Hierbei weist das Führungselement ein Rastelement zur Einrastung eines der Verschwenkung der Klemmscheibe dienenden Hebels auf. An den an der Klemmscheibe befestigten Hebel ist zu diesem Zweck beispielsweise ein mit einer Rastkontur des Führungselementes zusammenwirkender Rastzapfen angeformt.

Sämtliche mit den Wälzkörpern zusammenwirkende Kontaktelemente befinden sich innerhalb eines Ringraums, der um die Achse der Klemmvorrichtung angeordnet ist. Hierbei ist es ausreichend, wenn sich die Kontaktelemente in Umfangsrichtung insgesamt über weniger als die Hälfte des gedachten Ringraums erstrecken. Mit anderen Worten: Eine symmetrisch um die Achse der Klemmvorrichtung verlaufende kreisförmige Linie, die in der Mitte des Ringraums verläuft, in dem die Kontaktelemente angeordnet sind, verläuft insgesamt höchstens auf der Hälfte Ihrer Länge durch ein Kontaktelement. Umfasst die Klemmvorrichtung n Kontaktelemente, so erstreckt sich bei identisch gestalteten Kontaktelementen jedes der Kontaktelemente maximal über einen Winkel von 360°/2n. Die Kontaktelemente können in Axialansicht der Klemmvorrichtung beispielsweise jeweils einen Abschnitt eines Rings, entsprechend einem Abschnitt des gedachten Ringsraums, beschreiben. In einer bevorzugten, besonders einfachen Ausführungsform weisen die Kontaktelemente jedoch eine zylindrische Grundform auf, wobei die Achsen der einzelnen Zylinder parallel zur zentralen Achse der Klemmvorrichtung angeordnet sind. Die oben beschriebene kreisförmige Linie verläuft durch die Achsen der im Wesentlichen zylindrischen Kontaktelemente, sofern die einzelnen Kontaktelemente identischen Abstand von der Achse der Klemmvorrichtung haben. Die Wälzkörper kontaktieren die Stirnseiten der einzelnen Kontaktelemente.

Die Kontaktelemente sind ebenso wie die Wälzkörper und die Klemmscheibe vorzugsweise aus Metall gefertigt. Damit wird innerhalb der Klemmvorrichtung eine Axialkraft ausschließlich über Metallteile übertragen. Die Kontaktelemente weisen vorzugsweise eine höhere elastische Nachgiebigkeit als die Wälzkörper auf, so dass die Wälzkörper, ohne sich selbst signifikant zu verformen, bei in Klemmposition befindlicher Klemmvorrichtung in definierter Weise eine geringfügige Mulde in der stirnseitigen Oberfläche der Kontaktelemente ausformen können, wodurch die Flächenpressung begrenzt wird. Die mechanischen Eigenschaften der Kraft übertragenden Teile sind dabei derart bemessen, dass bei der Betätigung der Klemmvorrichtung die in axialer Richtung gemessene Spreizhöhe von der Verformung der Kontaktelemente höchstens in geringem, innerhalb üblicher Toleranzen liegender Maße beeinflusst wird.

Nachfolgend wird ein Ausführungsbeispiel der Erfindung anhand einer Zeichnung näher erläutert. Hierin zeigen:

### Kurze Beschreibung der Zeichnung

- Figur 1: in einer Schnittdarstellung eine Klemmvorrichtung für eine Lenksäule,
- Figur 2: in einer perspektivischen Darstellung eine Klemmscheibe der Klemmvorrichtung nach Figur 1,
- Figur 3: in einer perspektivischen Darstellung ein Führungselement für einzelne Kontaktelemente der Klemmvorrichtung nach Figur 1.

### Ausführliche Beschreibung der Zeichnung

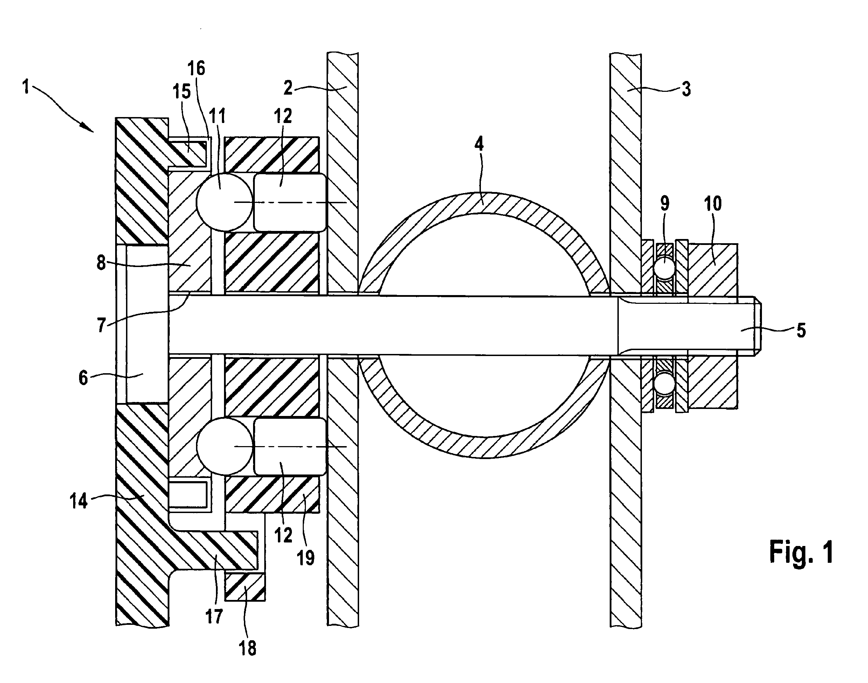

Eine in Figur 1 schematisch dargestellte Klemmvorrichtung 1 für eine höhenverstellbare und axial verstellbare Lenksäule in einem Kraftfahrzeug ist an zwei fest im Kraftfahrzeug eingebauten Tragarmen 2, 3 befestigt. Zwischen den Tragarmen 2, 3 befindet sich eine Haltevorrichtung 4 einer nicht weiter dargestellten Lenksäule, die zwischen den Tragarmen 2, 3 festklemmbar ist. Beide Tragarme 2, 3 sind von einem Klemmbolzen 5 durchdrungen, der Teil der Klemmvorrichtung 1 ist. Ein Kopf 6 des Klemmbolzens 5 liegt an einer eine Bohrung 7 aufweisenden Klemmscheibe 8 an, die parallel von den Tragarmen 2, 3 beabstandet ist. Auf der dem Kopf 6 abgewandten Seite des Klemmbolzens 5 ist dieser mittels eines Axiallagers 9 und eines Schlussstücks 10 am Tragarm 3 gehalten.

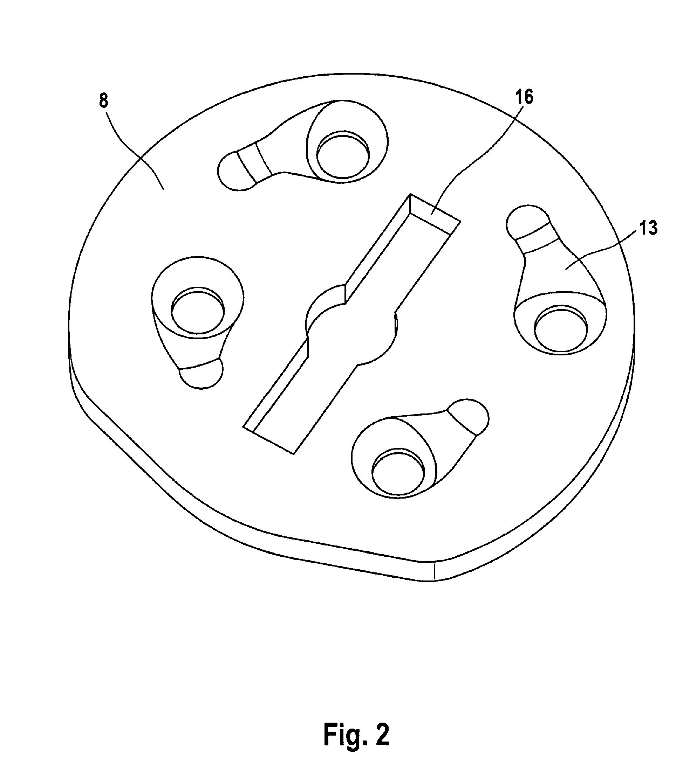

Die Klemmung zwischen den Tragarmen 2, 3 wird erzielt, indem durch Drehung der Klemmscheibe 8 der Abstand zwischen dieser und dem Tragarm 2 variiert wird. Der Kraftfluss erfolgt dabei vom Kopf 6 des Klemmbolzens 5 über die Klemmscheibe 8 zu auf dieser abrollenden Wälzkörpern 11 und weiter zu zylindrischen Kontaktelementen 12, die mit ihren Stirnseiten einerseits die Wälzkörper 11 und andererseits den Tragarm 2 kontaktieren. Die bestimmungsgemäße Spreizung der Klemmvorrichtung 1 wird mittels in der Oberfläche der Klemmscheibe 8 ausgebildeter, in Figur 2 erkennbarer Klemmrampen 13, auf welchen die im Ausführungsbeispiel kugelförmigen Wälzkörper 11 abrollen, erreicht.

Zur Verschwenkung der Klemmscheibe 8 ist an dieser ein manuell betätigbarer Hebel 14 aus Kunststoff befestigt. Hierbei greifen an den Hebel 14 angeformte Vorsprünge 15 in Aussparungen 16 der Klemmscheibe 8 ein. Die Gestaltung der Klemmscheibe 8 nach Figur 2 entspricht hinsichtlich der Befestigungsmöglichkeit des Hebels 14 nicht der schematischen Darstellung nach Figur 1, ist jedoch gleichwirkend.

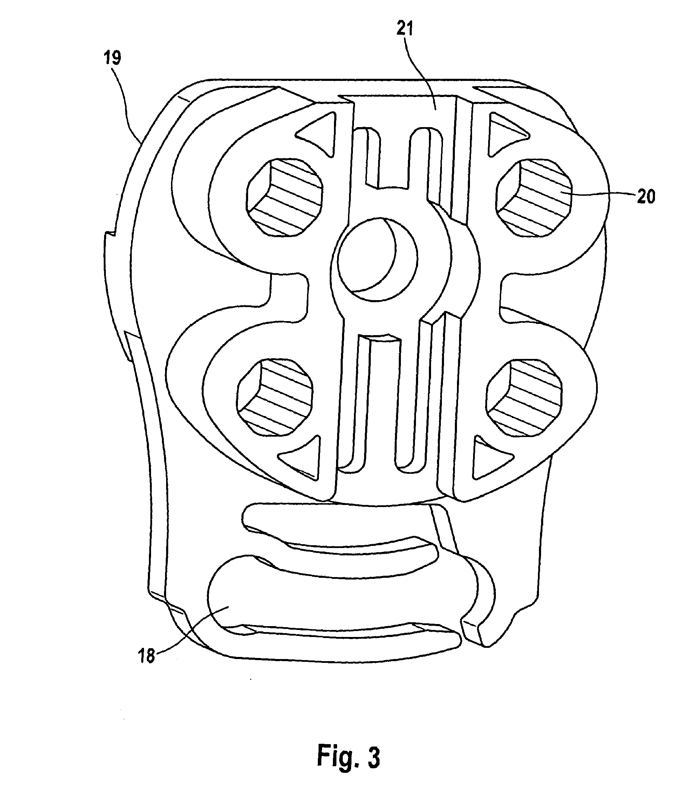

Am in Figur 1 nur ausschnittsweise sichtbaren Hebel 14 ist des weiteren ein Zapfen 17 angeformt, der mit einem in Figur 3 im Detail erkennbaren Rastelement 18 eines nachstehend noch näher erläuterten Führungselementes 19 zusammenwirkt.

Primäre Funktion des Führungselementes 19 ist die Führung der vier Kontaktelemente 12. Das Führungselement 19 weist hierzu vier polygonale, annähernd kreisförmige Bohrungen 20 auf, in denen jeweils ein zylindrisches Kontaktelement 12 axial verschieblich geführt ist. Zugleich ist in jeder Bohrung 20 auch einer der Wälzkörper 11 geführt. Wie aus Figur 3 hervorgeht, weist das Führungselement 19 ferner eine Verstellkontur 21 auf, die auf einfache Weise eine Linearverstellung, insbesondere Höhenverstellung, der Lenksäule ermöglicht. Bei dem Führungselement 19 handelt es sich somit um ein Multifunktionsbauteil, das sowohl eine besonders kompakte Bauweise als auch eine rationelle Fertigung der Klemmvorrichtung 1 erlaubt.

### Bezugszeichenliste

- 1: Klemmvorrichtung
- 2: Tragarm
- 3: Tragarm
- 4: Haltevorrichtung
- 5: Klemmbolzen
- 6: Kopf
- 7: Bohrung
- 8: Klemmscheibe
- 9: Axiallager
- 10: Schlussstück
- 11: Wälzkörper
- 12: Kontaktelement
- 13: Klemmrampe
- 14: Hebel
- 15: Vorsprung
- 16: Aussparung
- 17: Zapfen
- 18: Rastelement
- 19: Führungselement
- 20: Bohrung
- 21: Verstellkontur

## Patentansprüche

1. Klemmvorrichtung (1) zur Lagefixierung einer in ihrer Länge und/oder Neigung verstellbaren Fahrzeuglenksäule, mit einer Klemmscheibe (8) sowie mehreren Wälzkörpern (11), wobei an der Oberfläche der Klemmscheibe (8) Klemmrampen (13) für die Wälzkörper (11) derart ausgebildet sind, dass eine Klemmung zwischen der Halterung der Fahrzeuglenksäule dienenden Tragarmen erzielbar ist, **dadurch gekennzeichnet, dass** die Wälzkörper (11) jeweils eines von mehreren gesonderten, im Kraftfluss zwischen der Klemmscheibe (8) und einem Tragarm in einer gemeinsamen Ebene angeordneten, durch ein Führungselement (19) geführten Kontaktelementen (12) kontaktieren.

2. Klemmvorrichtung (1) nach Anspruch 1, **dadurch gekennzeichnet, dass** die Kontaktelemente (12) in einem gemeinsamen Führungselement (19) gelagert sind.

3. Klemmvorrichtung (1) nach Anspruch 2, **dadurch gekennzeichnet, dass** das Führungselement (19) aus Kunststoff gefertigt ist.

4. Klemmvorrichtung (1) nach Anspruch 2 oder 3, **dadurch gekennzeichnet, dass** das zur Lagerung der Kontaktelemente (12) vorgesehenen Führungselement (19) zugleich der Führung der Wälzkörper (11) dient.

5. Klemmvorrichtung (1) nach einem der Ansprüche 2-4, **dadurch gekennzeichnet, dass** das Führungselement (19) eine Verstellkontur (21) für eine Linearverstellung aufweist.

6. Klemmvorrichtung (1) nach einem der Ansprüche 2-5, **dadurch gekennzeichnet, dass** das Führungselement (19) ein Rastelement (18) zur Einrastung eines zur Verschwenkung der Klemmscheibe (8) vorgesehenen Hebels (14) aufweist.

7. Klemmvorrichtung (1) nach einem der Ansprüche 1-6, **dadurch gekennzeichnet, dass** die Kontaktelemente (12) eine zylindrische Grundform aufweisen.

8. Klemmvorrichtung (1) nach einem der Ansprüche 1-7, **dadurch gekennzeichnet, dass** die Kontaktelemente (12) aus Metall gefertigt sind.

9. Klemmvorrichtung (1) nach einem der Ansprüche 1-8, **dadurch gekennzeichnet, dass** die Kontaktelemente (12) eine höhere elastische Nachgiebigkeit als die Wälzkörper (11) aufweisen.

## Claims

1. Clamping device (1) for the positional fixing of a vehicle steering column which can be adjusted in its length and/or inclination, with a clamping disc (8) and with a plurality of rolling bodies (11), with clamping ramps (13) for the rolling bodies (11) being formed on the surface of the clamping disc (8) in such a manner that clamping between supporting arms serving to hold the vehicle steering column can be obtained, **characterized in that** the rolling bodies (11) each make contact with one of a plurality of separate contact elements (12) which are arranged in a common plane in the force flux between the clamping disc (8) and a supporting arm and are guided by a guide element (19).

2. Clamping device (1) according to Claim 1,
**characterized in that** the contact elements (12) are mounted in a common guide element (19).

3. Clamping device (1) according to Claim 2,
**characterized in that** the guide element (19) is manufactured from plastic.

4. Clamping device (1) according to Claim 2 or 3, **characterized in that** the guide element (19) provided for the mounting of the contact elements (12) serves at the same time to guide the rolling bodies (11).

5. Clamping device (1) according to one of Claims 2-4, **characterized in that** the guide element (19) has an adjustment contour (21) for a linear adjustment.

6. Clamping device (1) according to one of Claims 2-5, **characterized in that** the guide element (19) has a latching element (18) for the latching in place of a lever (14) provided for pivoting the clamping disc (8).

7. Clamping device (1) according to one of Claims 1-6, **characterized in that** the contact elements (12) have a cylindrical basic shape.

8. Clamping device (1) according to one of Claims 1-7, **characterized in that** the contact elements (12) are manufactured from metal.

9. Clamping device (1) according to one of Claims 1-8, **characterized in that** the contact elements (12) have greater elastic flexibility than the rolling bodies (11).

## Revendications

1. Dispositif de serrage (1) pour la fixation en position d'une colonne de direction d'un véhicule dont la longueur et/ou l'inclinaison est réglable, comprenant un disque de serrage (8) ainsi que plusieurs corps de roulement (11), des rampes de serrage (13) pour les corps de roulement (11) étant réalisées sur la surface du disque de serrage (8) de telle sorte que l'on puisse obtenir un serrage entre la fixation des bras de support servant à la colonne de direction d'un véhicule, **caractérisé en ce que** les corps de roulement (11) viennent en contact à chaque fois avec un parmi une pluralité d'éléments de contact (12) séparés, disposés dans un plan commun dans le flux de forces entre le disque de serrage (8) et un bras de support et guidés par un élément de guidage (19).

2. Dispositif de serrage (1) selon la revendication 1, **caractérisé en ce que** les éléments de contact (12) sont montés dans un élément de guidage commun (19).

3. Dispositif de serrage (1) selon la revendication 2, **caractérisé en ce que** l'élément de guidage (19) est en plastique.

4. Dispositif de serrage (1) selon la revendication 2 ou 3, **caractérisé en ce que** l'élément de guidage (19) prévu pour le support des éléments de contact (12) sert en même temps à guider les corps de roulement (11).

5. Dispositif de serrage (1) selon l'une quelconque des revendications 2 à 4, **caractérisé en ce que** l'élément de guidage (19) présente un contour de réglage (21) pour un réglage linéaire.

6. Dispositif de serrage (1) selon l'une quelconque des revendications 2 à 5, **caractérisé en ce que** l'élément de guidage (19) présente un élément d'encliquetage (18) pour l'encliquetage d'un levier (14) prévu pour faire pivoter le disque de serrage (8).

7. Dispositif de serrage (1) selon l'une quelconque des revendications 1 à 6, **caractérisé en ce que** les éléments de contact (12) présentent une forme de base cylindrique.

8. Dispositif de serrage (1) selon l'une quelconque des revendications 1 à 7, **caractérisé en ce que** les éléments de contact (12) sont en métal.

9. Dispositif de serrage (1) selon l'une quelconque des revendications 1 à 8, **caractérisé en ce que** les éléments de contact (12) présentent une plus grande flexibilité élastique que les corps de roulement (11).
